Europäisches Patentamt

**European Patent Office**

**Office européen des brevets**

(19)

(11) Publication number: **0 040 772**
A1

(12)

# EUROPEAN PATENT APPLICATION

(21) Application number: **81103746.4**

(22) Date of filing: **15.05.81**

(51) Int. Cl.³: **B 25 D 17/24,** F 16 F 9/49

(30) Priority: **27.05.80 PC/US80/006 39**

(43) Date of publication of application: **02.12.81**
**Bulletin 81/48**

(84) Designated Contracting States: **BE DE FR GB**

(71) Applicant: **CATERPILLAR TRACTOR CO., 100 Northeast**
**Adams Street, Peoria Illinois 61629 (US)**

(72) Inventor: **Roussin, Michael Anthony, 3120 West Forsythe,**
**Peoria, Illinois 61614 (US)**
Inventor: **Livesay, Richard Edward, 1011 Deerbrook**
**Drive, Peoria, Illinois 61614 (US)**

(74) Representative: **Wagner, Karl H., P.O.**
**Box 246 Gewuerzmuehlstrasse 5,**
**D-8000 München 22 (DE)**

(54) **A recoil and positioning mechanism.**

(57) A recoil and positioning mechanism for a reciprocating member (32) utilizes an accumulator (50) to absorb recoil force. The reciprocating member (32) is reset after recoil to a predetermined position to avoid contact with a force imparting eccentric drive (20). This mechanism is particularly useful in absorbing recoil and repositioning the intermediate impact link of a rock breaker.

EP 0 040 772 A1

-1-

## Description

## A Recoil and Positioning Mechanism

### Technical Field

This invention relates to rock-breaking machinery. In particular, it relates to a recoil and positioning mechanism for the reciprocating member of such machinery.

### Background Art

In reciprocating machinery, and particularly rock breakers, there is a requirement to dampen the motion of the reciprocating mechanism on the recoil stroke. In some rock breakers an eccentric mechanism provides intermittent power strokes to the rock breaker shank through an intermediate impact link located between the eccentric and the shank. In earlier impact devices the shank was usually impacted directly by the eccentric ring. A seal was generally provided between the shank and the housing. The seal generally experienced a short life due to the large number of cycles and large displacement (8 1/2 to 9 cm) during each cycle. Recoil of the shank was absorbed by more conventional dampening devices located exterior of the drive mechanism. An example of such an exterior recoil damper is found is U.S. Patent No. 3,868,145.

In intermediate impact link type rock breakers, as contrasted to the large displacement type just described, a force to be applied to the shank ordinarily does not occur until the shank is displaced rearwardly to engage the intermediate impact link which in turn is displaced rearwardly under the influence of the shank and into a position to be

0040772

-2-

contacted by the eccentric. As the eccentric rotates so that its periphery contacts the intermediate impact link, the force in the eccentric is transmitted through the intermediate impact link to the shank and rock breaking tip which in turn act on the working surface. As the eccentric continues to rotate the force is relieved from the intermediate impact link thus permitting the shank to recoil with the recoil transmitted to the intermediate impact link. Although the motion of the shank could be dampened in the manner shown in U.S. Patent No. 3,868,145, that is by an exterior damper mounted adjacent the shank, the recoil motion of the intermediate impact link which is contained substantially within the housing and is relatively free floating, must also be dampened.

In addition to dampening the intermediate impact link, it is desirable to reposition the intermediate impact link and also absorb recoil of the shank member during the recoil stroke. Repositioning of the intermediate impact link is appropriate in order to prevent unnecessary wear and loss of power in the device. Specifically, as the intermediate impact link recoils, it will be contacted by the eccentric on the next rotation of the eccentric. If the rock breaker tip and shank have been retracted or withdrawn from the working surface, this second power stroke is superfluous and should, if possible, be avoided. By repositioning the intermediate impact link away from the extreme range or throw of the eccentric, the power expended in such an unnecessary stroke is avoided.

The present invention is directed to overcoming one or more of the problems set forth above.

## Disclosure of the Invention

In one aspect of the present invention, a recoil and positioning mechanism is mounted in a housing defining a bore therethrough. The housing further defines an annular cavity surrounding the bore and communicating therewith. A reciprocating member is mounted for reciprocation in first and second directions in the bore. An annular piston is mounted for reciprocation in the same first and second directions in the annular cavity. Fluid means bias the annular piston in a first direction so that the annular piston will also urge the reciprocating member in the same first direction.

The present invention serves to dampen the motion of the reciprocating member in one direction while permitting relatively free movement of the reciprocating member in the other opposite direction and further serves to position the reciprocating member. This recoil and positioning member is particularly appropriate in those devices such as rock breakers which require a force to be imparted to a tool which may result in the recoil force of the tool being imparted back to the machine.

## Brief Description of the Drawings

FIG. 1 is a view, partly in section, of an embodiment of the recoil and positioning mechanism as used with an intermediate impact link of a rock breaker.

FIG. 2 is a view, partly in section and partly schematic, of the embodiment of the recoil and positioning mechanism shown in FIG. 1.

Best Mode for Carrying Out the Invention

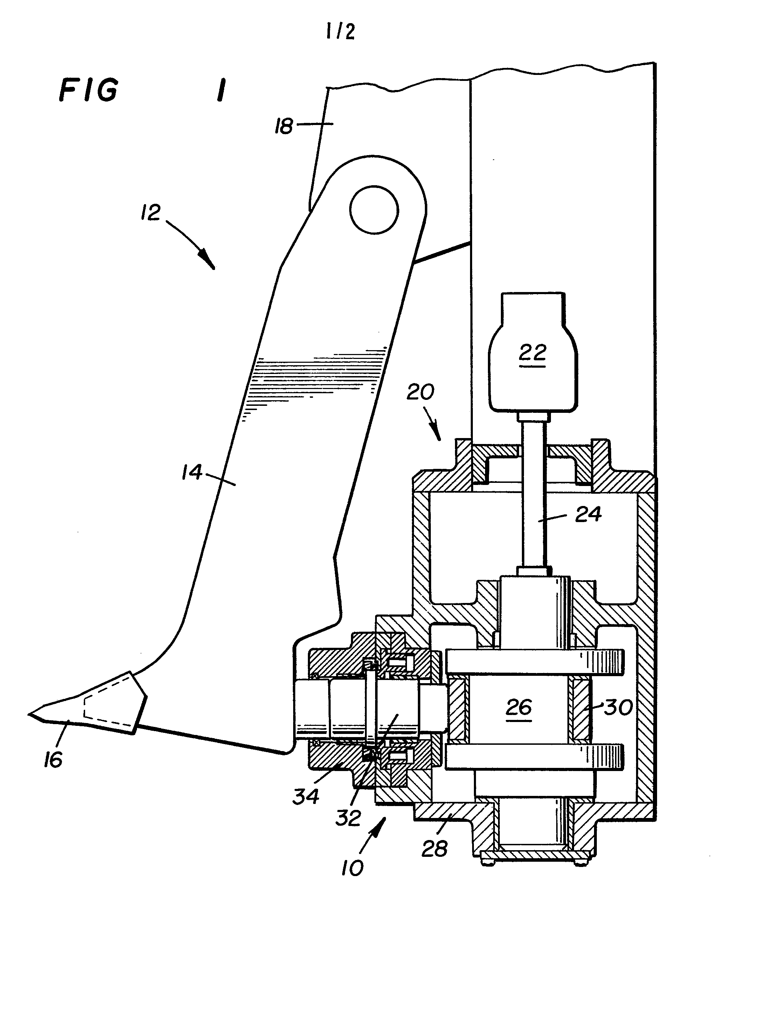

Referring to FIG. 1, a recoil and positioning mechanism 10 is shown in use in a rock breaking device 12. Rock breaking device 12 is adapted for mounting on an earth-working machine (not shown) and includes a shank 14 and a rock breaking tip 16 mounted thereupon. Shank 14 is pivotally mounted to a structure 18 which may be affixed to the earth-working machine (not shown). Also affixed to structure 18 is an eccentric drive mechanism 20 which includes a prime mover 22 driving a shaft 24 which in turn is operable to rotate an eccentric 26 shown mounted in a housing 28. Mounted upon eccentric 26 is a drive ring 30 which operates against an intermediate impact link 32. Intermediate impact link 32 is mounted for reciprocation in first and second directions in a portion 34 of housing 28.

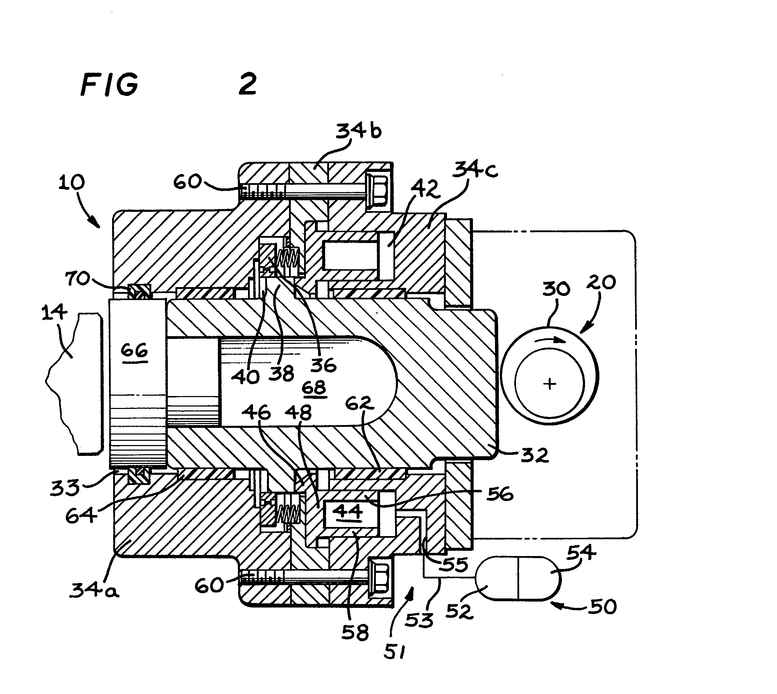

Referring now to FIG. 2, it can be seen that portion 34 of housing 28 is formed in three subportions, 34a, 34b, and 34c, each defining a continuous bore 33. In the embodiment shown in FIG. 2, the three subportions 34a, 34b, and 34c are useful for assembly purposes in order to insert an intermediate link damper mechanism 36 and the recoil and positioning mechanism 10 in portion 34. Intermediate link damper mechanism 36 serves to retard motion of only intermediate impact link 32 in a second direction, that is, toward eccentric drive mechanism 20 or downwardly in FIG. 2.

Located primarily in subportions 34b and 34c is the recoil and positioning mechanism 10. Recoil and positioning mechanism 10 is adapted to act on a shoulder 38 formed on intermediate impact link 32 generally at the midpoint thereof. This shoulder 38 is positioned in a cavity 40 which surrounds intermediate impact link 32. Also located in cavity 40 is the intermediate link damper mechanism 36. A second cavity, in particular an annular cavity 42, is formed in subportion 34c of housing 28 and has mounted therein an annular piston 44. Annular piston 44 has an inwardly extending boss 46 which is formed to engage shoulder 38. Boss 46 is located at the closed end 48 of piston 44.

With annular piston 44 located in annular cavity 42, a substantially incompressible fluid may be introduced into cavity 44 to urge annular piston 44 upwardly as shown in FIG. 2 so that boss 46, while in contact with shoulder 38, urges intermediate impact link 32 in a first direction or upwardly at least to the position shown in FIG. 2 which is clear of the range of drive ring 30. Such urging of intermediate impact link 32 upwardly is limited by the structure of subportion 34b of housing 34 although the intermediate impact link may travel in the same first direction or upwardly until the intermediate impact link engages subportion 34a. In particular, closed end 48 of annular piston 44 comes into contact with subportion 34b. In order to maintain annular piston 44 in this upward position, it has been found appropriate to utilize an accumulator 50 which may be preloaded in the lower portion 52 with an incompressible fluid and in the lower portion 54 with a compressible fluid such as nitrogen or the like. A conduit 53 and a passage 55 provide communication between accumulator 50 and annular cavity 42, all of which constitute fluid means 51 to bias annular piston 44. It may be appropriate to pressurize the compressible fluid so that intermediate impact link 32 is pre-positioned as shown in FIG. 2.

Annular piston 44 may be formed as indicated in FIG. 2 with an inner skirt 56 and an outer skirt 58, each of which slidably engages the inner and outer walls, respectively, of annular cavity 42.

It should be apparent with reference to FIG. 2 that the various subportions of housing 34 are interconnected by fastening means such as bolts 60. Furthermore, intermediate impact link 32, which is mounted for reciprocation in these portions, is supported by sleeve bearing means 62 and 64. Finally, intermediate impact link 32 may be formed with an operable head 66 of smaller diameter than the basic intermediate impact link. This head 66, in the embodiment shown in FIG. 2, is received in an axial bore 68 of the intermediate impact link 32. The head 66 is in engagement with seal 70 mounted in subportion 34a.

Industrial Applicability

Referring to FIG. 1, the recoil and positioning mechanism is shown in the environment of a rock breaker which consists of shank 14, intermediate impact link 32, and an eccentric drive mechanism 20.

During operation, prime mover 22 is operable to rotate eccentric 26 along with drive ring 30. With intermediate impact link 32 in its "at rest" position, as shown in FIG. 2, there will be no contact between drive ring 30 and intermediate impact link 32. This is brought about by annular piston 44 acting on shoulder 38 of intermediate impact link 32 to urge it to the "at rest" position shown in FIG. 2.  This urging occurs as a result of the fluid pressure contained in accumulator 50 acting on the skirted end of annular piston 44.

As tip 16 is brought into contact with a working surface such as rock, or the like, shank 14 is moved rightwardly as shown in FIG. 1 thus urging intermediate impact link 32 to the right.  As can be seen in FIG. 2, such movement is downwardly or in the second direction), bringing intermediate impact link 32 within the range of drive ring 30.  As drive ring 30 rotates in a clockwise direction, intermediate impact link 32 may be pushed further downwardly so that as drive ring 30 continues in its clockwise direction, a point on its surface will come into contact with intermediate impact link 32 and urge it upwardly.  During the period of downward movement (as shown in FIG. 2), annular piston 44 is moved downwardly in annular cavity 42 compressing the compressible fluid contained in portion 54 of accumulator 50.  During the power stroke, that is, after drive ring 30 has contacted intermediate impact link 32, the link is moved rapidly upwardly to transmit the force of the eccentric drive mechanism 20 to rock breaker tip 16 through shank 14.  As the eccentric drive mechanism rotates past a "top dead center" position, the tip 16 and shank 14, along with intermediate impact link 32, are free to recoil from the rock face.  Initial recoil is absorbed by intermediate impact link recoil mechanism 36. However, shank 14 and intermediate impact link 32 may have sufficient recoil to reach at least the position shown in FIG. 2 when substantially all the recoil absorption capabilities of intermediate impact link recoil mechanism 36 are expended. At this time, shoulder 38 contacts boss 46 of annular piston 44. Further downward movement of intermediate impact link 32 is inhibited by the pressure buildup in the gas dampening system contained in accumulator 50 which is associated with annular cavity 42 by conduit 53 and passage 55. As the last vestiges of recoil are absorbed in accumulator 50, the pressure buildup in cavity 54 is sufficient to force annular piston 44 upwardly as shown in FIG. 2, thereby repositioning the intermediate impact link to its center or "at rest" position as shown in FIG. 2. This position is appropriate to remove the intermediate impact link 32 from contact with eccentric drive ring 30 except during those periods of time when it is desirable to impart a force to the intermediate impact link.

Other aspects, objects and advantages of this invention can be obtained from a study of the drawings, the disclosure and the appended claims.

The terms "upwardly" and "downwardly" used in connection with Fig. 2 could be replaced by "rightwardly" and "leftwardly", respectively, unless Fig. 2 is rotated by 90° in a clockwise direction.

The invention may be summarized as follows:

1. A recoil and positioning mechanism comprising:

a housing (28) having a bore (33) and an annular cavity (42) surrounding and communicating with said bore (33);

a reciprocating member (32) mounted within said bore (33) and being reciprocally movable in first and second directions;

an annular piston (44) mounted within said cavity (42) and being reciprocally movable in said first and second directions;

fluid means (51) for biasing said annular piston (44) in said first direction;

said (44) adapted to urge said reciprocating member (32) in said first direction.

2. The recoil and positioning mechanism of item 1 wherein the fluid means (50,53,55) (51) includes a compressible fluid.

3. The recoil and positioning mechanism of item 2 wherein the fluid means (51) further includes a substantially incompressible fluid.

4. The recoil and positioning mechanism of item 3 wherein the fluid means (51) includes a pressure vessel (50) having a first chamber (52) and a second chamber (54), and means (53) for communicating said second chamber (54) to one side of the annular piston (44); and the substantially incompressible fluid is contained in said second chamber (54) and the compressible fluid is contained in said first chamber (52).

5. The recoil and positioning mechanism of item 2 wherein the compressible fluid is normally under pressure.

6. The recoil and positioning mechanism of item 1 wherein the reciprocating member (32) has a shoulder (38) disposed in a portion of the annular cavity (42), and the annular piston (44) is engagable with said shoulder (38).

7. The recoil and positioning mechanism of item 6 wherein the housing (28) is adapted to limit movement of the reciprocating member (32) in the first direction a first amount and the housing (28) is adapted to limit movement of an annular piston (44) in the said first direction an amount less than said first amount.

8. The recoil and positioning mechanism of item 7 wherein the fluid means (51) includes a compressible fluid.

9. The recoil and positioning mechanism of claim 8 wherein the fluid means includes a substantially incompressible fluid.

10. The recoil and positioning mechanism of item 9 wherein the fluid means (51) includes a pressure vessel (50) having a first chamber (52) and a second chamber (54), and means (53) for communicating said second chamber (54) to one side of the annular piston (44); and the substantially incompressible fluid is contained in said second chamber (54) and the compressible fluid is contained in said first chamber (52).

11. The recoil and positioning mechanism of item 10 wherein the compressible fluid is normally under pressure.

12. A rock breaking machine having a tip retaining shank (14), an eccentric drive mechanism (20), an intermediate impact link (32) for delivering power from the eccentric drive mechanism to the tip retaining shank (14) and a housing (28) for rotatably mounting the eccentric drive mechanism (20) and reciprocally mounting the intermediate impact link (32), a recoil and positioning mechanism, comprising:
a piston (44) reciprocally mounted in the housing (20) and adapted to urge the intermediate impact link a first direction; and
fluid means (51) for biasing said piston in said first direction to a position wherein said intermediate link is spaced from said eccentric drive mechanism.

13. The rock breaking machine of item 12 wherein the housing (28) has a bore (33) and an annular cavity (42) surrounding said bore (33) and wherein the intermediate impact link (32) is mounted in said bore (33); further wherein the piston (44) is mounted about said intermediate impact link (33) in said annular cavity (42).

14. The rock breaking machine of item 13 wherein the intermediate impact link has a shoulder (38) thereabout adapted for engagement with the piston.

15. In a rock breaking machine having a tip retaining shank (14) an eccentric drive mechanism (20), an intermediate impact link (32) for delivering power from the eccentric drive mechanism to the tip retaining shank (14) and a housing (28) for rotatably mounting the eccentric drive mechanism (20) and reciprocally mounting the intermediate impact link (32), the improvement comprising:
a piston (44) reciprocally mounted in said housing (28) about said intermediate impact link and adapted to urge said intermediate impact link in a first direction; and
fluid means (51) for biasing said piston in said first diction wherein said intermediate impact link is spaced apart from said eccentric drive mechanism.

## Claims

1.  A recoil and positioning mechanism comprising:

a housing (28) having a bore (33) and an annular cavity (42) surrounding and communicating with said bore (33);

a reciprocating member (32) mounted within said bore (33) and being reciprocally movable in first and second directions;

an annular piston (44) mounted within said cavity (42) and being reciprocally movable in said first and second directions;

fluid means (51) for biasing said annular piston (44) in said first direction;

said annular piston (44) being adapted to urge said reciprocating member (32) in said first direction.

2.  The recoil and positioning mechanism of claim 1 wherein the fluid means (50,53,55) (51) includes a compressible fluid.

3.  The recoil and positioning mechanism of claim 2 wherein the fluid means (51) further includes a substantially incompressible fluid.

4. The recoil and positioning mechanism of claim 3 wherein the fluid means (51) includes a pressure vessel (50) having a first chamber (52) and a second chamber (54), and means (53) for communicating said second chamber (54) to one side of the annular piston (44); and the substantially incompressible fluid is contained in said second chamber (54) and the compressible fluid is contained in said first chamber (52).

5. The recoil and positioning mechanism of claims 2 through 4 wherein the compressible fluid is normally under pressure.

6. The recoil and positioning mechanism of claims 1 through 5 wherein the reciprocating member (32) has a shoulder (38) disposed in a portion of the annular cavity (42), and the annular piston (44) is engagable with said shoulder (38).

7. The recoil and positioning mechanism of claims 1 through 6 wherein the housing (28) is adapted to limit movement of the reciprocating member (32) in the first direction a first amount and the housing (28) is adapted to limit movement of said annular piston (44) in the said first direction an amount less than said first amount.

8. A rock breaking machine having a tip retaining shank (14), an eccentric drive mechanism (20), an intermediate impact link (32) for delivering power from the eccentric drive mechanism to the tip retaining shank (14) and a housing (28) for rotatably mounting the eccentric drive mechanism (20) and reciprocally mounting the intermediate impact link (32), a recoil and positioning mechanism, comprising:

a piston (44) reciprocally mounted in the housing (28) and adapted to urge the intermediate impact link a first direction; and

fluid means (51) for biasing said piston in said first direction to a position wherein said intermediate link is spaced from said eccentric drive mechanism.

9. The rock breaking machine of claim 8 wherein the housing (28) has a bore (33) and an annular cavity (42) surrounding said bore (33) and wherein the intermediate impact link (32) is mounted in said bore (33); further wherein the piston (44) is mounted about said intermediate impact link (33) in said annular cavity (42).

10. The rock breaking machine of claim 12 or 13 wherein the intermediate impact link has a shoulder (38) thereabout adapted for engagement with the piston.

FIG 1

0040772

1/2

FIG 2

European Patent
Office

**EUROPEAN SEARCH REPORT**

00 40772

Application number

EP 81 10 3746

| | **DOCUMENTS CONSIDERED TO BE RELEVANT** | | | CLASSIFICATION OF THE APPLICATION (Int. Cl.³) |
|---|---|---|---|---|
| Category | Citation of document with indication, where appropriate, of relevant passages | Relevant to claim | | B 25 D 17/24<br>F 16 F 9/49 |
| | FR - A - 884 602 (FRANKFURTER MASCHINENBAU)<br><br>\* Page 2, lines 14-52, 66-90; page 3, lines 16-39; abstracts 1,2; figure \*<br><br>--- | 1,2 | | |
| | US - A - 2 660 153 (F. ABT)<br><br>\* Column 3, lines 6-58; figures 2-5,7,8 \*<br><br>--- | 1,2 | | |
| | US - A - 4 068 727 (K.H. ANDERSSON et al.)<br><br>\* Column 3, lines 9-23; figures 1 and 2 \*<br><br>--- | 1,2 | | TECHNICAL FIELDS SEARCHED (Int. Cl.³)<br><br>B 25 D<br>E 02 F<br>E 21 C<br>E 21 D<br>F 16 F |
| A | US - A - 3 920 086 (A.A. GOPPEN et al.) | | | |
| D/A | US - A - 3 868 145 (D.E COBB) | | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 05.08.1981 | JAUNEZ |

EPO Form 1503.1 06.78